# EUROPÄISCHE PATENTSCHRIFT

(11) **EP 1 983 218 B1**
(45) Veröffentlichungstag und Bekanntmachung des Hinweises auf die Patenterteilung: **22.06.2011**
(21) Anmeldenummer: 08004889.5
(22) Anmeldetag: 15.03.2008
(51) Int. Cl.: F16H 7/08

(54) **Hydraulische Spanneinrichtung für ein Zugmittelgetriebe**
Hydraulic tensioning device for a tractor transmission system
Système de serrage hydraulique pour un mécanisme à élément de traction

(30) Priorität: 21.04.2007 DE 102007018961
(43) Veröffentlichungstag der Anmeldung: 22.10.2008
(73) Patentinhaber: Bayerische Motoren Werke Aktiengesellschaft, 80809 München (DE)
(72) Erfinder: Kraft, Roland, 80995 München (DE); Köhler, Reinhard, 80999 München (DE); Reuss, Bernhard, 81247 München (DE)

(56) Entgegenhaltungen:
- EP-A- 1 369 621
- DE-A1- 3 915 227
- DE-A1- 10 327 214
- DE-A1- 19 510 681
- DE-A1- 19 943 402
- JP-A- 2000 145 904

## Beschreibung

Die Erfindung betrifft eine hydraulische Spanneinrichtung für ein Zugmittelgetriebe, insbesondere Kettentrieb einer Brennkraftmaschine, umfassend ein Gehäuse und einen darin beweglich angeordneten federkraft- und hydraulisch beaufschlagten Spannkolben und einen federkraftbeaufschlagten Ausgleichskolben, wobei die Spanneinrichtung hydraulisch geschlossen und der Ausgleichskolben zum Ausgleich des abgeschlossenen Hydraulikvolumens geeignet ist.

Eine derartige Spanneinrichtung ist beispielsweise aus der DE 40 35 823 C1 bekannt, der zufolge ein hydraulisch beaufschlagbarer Spannkolben zum Spannen eines Zugmittelgetriebes dient.

Eine hydraulische Dämpfung des federbelasteten Spannkolbens wird gemäß der DE 40 35 823 C1 bei üblichen Belastungen durch Verdrängen von Hydraulikmedium aus einer Dämpfungskammer über einen zwischen Spannkolben und dessen Führungsbuchse gebildeten Leckspalt erzielt, wobei die Leckagemenge an Hydraulikmedium über ein Rückschlagventil aus einem Vorratsraum beim Ausfahren des Spannkolbens in Spannrichtung ersetzt wird. Der Vorratsraum steht über eine Zulaufbohrung im Spannkolben und einen Zulauf in der Führungsbuchse mit einem Druckanschluss, welcher an das Druck-Schmiersystem der Brennkraftmaschine angeschlossen ist, in Verbindung.

Diese bekannte Spanneinrichtung benötigt eine Versorgung mit Hydraulikmedium, wobei ein vorbestimmter Volumenstrom und ein vorbestimmter Mindestdruck Voraussetzung für ein einwandfreies Funktionieren der Spanneinrichtung sind. Die Spanneinrichtung ist erst dann vollständig betriebsfähig, wenn das Hydraulikmedium mit einem vorbestimmten Mindestdruck am Druckanschluss anliegt.

Die aus der DE 40 35 823 C1 bekannte Spanneinrichtung benötigt eine eigene Versorgung mit Hydraulikmedium, außerdem muss, da sie an das Druck-Schmiersystem der Brennkraftmaschine angeschlossen ist, dieses unter Berücksichtigung der Spanneinrichtung ausgelegt werden.

Beim Starten der Brennkraftmaschine muss in der Spanneinrichtung vom Druck-Schmiersystem zunächst ein ausreichend hoher Schmiermitteldruck aufgebaut werden, bevor die Spanneinrichtung funktionsfähig ist. Während der Startphase kann das Zugmittelgetriebe ungespannt oder nicht ausreichend gespannt laufen mit der Folge einer unerwünschten Geräuschentwicklung, von Übertragungsungenauigkeiten im Zugmittelgetriebe und eines übermäßigen Verschleißes des Zugmittels.

Aus der gattungsgemäßen DE 199 43 402 A1 ist ein Selbstspanner mit einem Gehäuse, einem darin beweglich angeordneten federkraft- und hydraulisch beaufschlagten Spannkolben und einem Ausgleichskolben zum Volumen-Ausgleich bekannt.

Der Erfindung liegt daher die Aufgabe zugrunde, eine eingangs genannte Spanneinrichtung bereitzustellen, welche keine gesonderte Versorgung mit Hydraulikmedium benötigt und welche bereits beim Starten der Brennkraftmaschine voll funktionsfähig ist. Darüber hinaus soll eine Auslegung des Druck-Schmiersystems der Brennkraftmaschine von der Spanneinrichtung unabhängig ermöglicht werden.

Die Lösung der Aufgabe erfolgt mit einer hydraulischen Spanneinrichtung mit den Merkmalen des Anspruchs 1, wobei gemäß der zugrundeliegenden Idee das Gehäuse einen Außenmantel und einen Innenmantel umfasst, wobei der Spannkolben außenseitig des Innenmantels und der Ausgleichskolben zwischen Außenmantel und Spannkolben geführt ist oder wobei der Spannkolben innenseitig des Innenmantels und der Ausgleichskolben zwischen Außen- und Innenmantel geführt ist.

Besonders zu bevorzugende Ausführungen der Erfindung sind Gegenstand der Unteransprüche.

Vorzugsweise umfasst die erfindungsgemäße Spanneinrichtung eine Einrichtung zum Ausgleich des abgeschlossenen Hydraulikvolumens. Damit ist es möglich, temperatur- und/oder verschleißbedingte Volumenänderungen auszugleichen.

Sehr vorteilhaft ist es, wenn die Volumenausgleichseinrichtung einen federkraftbeaufschlagten Ausgleichskolben umfasst. Auf diese Weise ist ein Volumenausgleich ohne Zu- oder Abfuhr von Hydraulikmedium möglich.

Gemäß einer besonders bevorzugten Ausgestaltung der Erfindung ist bei einer Spanneinrichtung, bei welcher im Gehäuse ein Hochdruckraum und ein Niederdruckraum gebildet sind, der Spannkolben dem Hochdruckraum zugeordnet und längs geführt ist, zwischen Hochdruckraum und Niederdruckraum ein Rückschlagventil angeordnet ist und zwischen Spannkolben und dessen Längsführung ein Leckspalt gebildet ist, der Ausgleichskolben zum Ausgleich des Niederdruckraumvolumens geeignet.

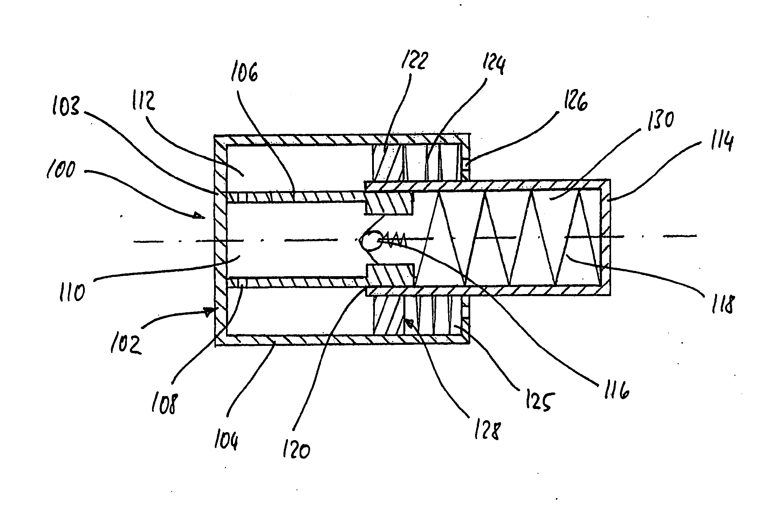

Nachfolgend wird ein besonders zu bevorzugendes Ausführungsbeispiel der Erfindung unter Bezugnahme auf die einzige Figur, welche eine Spanneinrichtung 100 mit einem Gehäuse 102 und einem darin beweglich angeordneten federkraft- und hydraulisch beaufschlagten Spannkolben 114 umfasst, näher erläutert.

Die vorliegende Spanneinrichtung 100 wirkt mit einer Spannschiene eines Kettentriebs zum Antrieb von Nockenwellen einer hier nicht näher gezeigten Brennkraftmaschine zusammen.

Das Gehäuse 102 der Spanneinrichtung 100 ist zylinderförmig gestaltet und umfasst einen Außenmantel 104, einen Innenmantel 106 und einen Boden 103, von dem aus sich der Innenmantel 106 erstreckt. Das dem Boden 103 abgewandte Ende des Innenmantels 106 weist eine Öffnung auf, in welcher ein Rückschlagventil 116 angeordnet ist. Zwischen Außenmantel 104 und Innenmantel 106 ist ein Ringraum 112, innerhalb des Innenmantels 106 ist ein zylindrischer Raum 110 gebildet. Die Räume 110, 112 werden als Niederdruckraum bezeichnet und sind über Bohrung 108 miteinander verbunden.

Am Innenmantel 104 ist ein Spannkolben 114 längsverschieblich geführt, wobei der Spannkolben 114 zylindrisch-topfförmig ausgestaltet ist und mit seinem offenen Ende den Innenmantel 104 umgreift unter Bildung eines Leckspalts 120. Innerhalb des Spannkolbens 114 ist ein Hochdruckraum 130 gebildet. Der Spannkolben 114 ist in Spannrichtung, entsprechend seiner ausgefahrenen Stellung, mittels einer Spannkolbenrückstellfeder 118 kraftbeaufschlagt.

Der ringförmige Niederdruckraum 112 wird an seinem dem Gehäuseboden 103 abgewandten Ende von einem ringförmigen Ausgleichskolben 122 begrenzt. Der Ausgleichskolben 122 ist in Richtung des Gehäusebodens 103 mittels einer Ausgleichsfeder 124, welche sich am Ausgleichskolben 122 einerseits und an dem dem Gehäuseboden 103 abgewandten Gehäuseende andererseits abstützt, kraftbeaufschlagt. Der Ausgleichsfederraum 125 weist Bohrungen 126 zum Druckausgleich auf.

Die Niederdruckräume 110, 112 sowie der Hochdruckraum 130 der Spanneinrichtung 100 sind mit einem Hydraulikmedium, beispielsweise einem Hydrauliköl, vollständig gefüllt. Im Betrieb wirkt eine dynamische Kraft über die Spannschiene auf den Spannkolben 114. Das Rückschlagventil 116 sperrt einen Hydraulikmediumfluss vom Hochdruckraum 130 zum Niederdruckraum 110, sodass dabei im Hochdruckraum 130 befindliches Hydraulikmedium druckbelastet wird. Eine hydraulische Dämpfung des federbelasteten Spannkolbens 114 wird über den zwischen Innenmantel 106 und Spannkolben 114 gebildeten Leckspalt 120 erreicht, indem bei Belastung des Spannkolbens 114 ein definierter Leckstrom vom Hochdruckraum 130 in den Niederdruckraum 112 ermöglicht ist.

Sobald die auf den Spannkolben 114 wirkende Kraft geringer wird, beispielsweise aufgrund eines Wechselmoments des Ventiltriebs, entspannt die Rückstellfeder 118 und über das Rückschlagventil 116 fließt Hydraulikmedium vom Niederdruckraum 110 in den Hochdruckraum 130.

Das im Niederdruckraum 110, 112 sowie im Hochdruckraum 130 befindliche Hydraulikmedium nimmt bei höherer Temperatur ein größeres Volumen ein als bei niedriger Temperatur. Eine betriebsbedingte Längung des Zugmittels erfordert ein weiteres Ausfahren des Spannkolbens 114 in Spannrichtung, um die Spannung im Zugmittel aufrecht zu erhalten. Aufgrund von Temperaturänderungen und verschleißbedingt wird daher ein Volumenausgleich benötigt. Dieser Ausgleich erfolgt vorliegend mittels des Ausgleichkolbens 122, welcher über eine Ausgleichsfeder 124 vorgespannt ist. Dehnt sich das Hydraulikmedium aufgrund der Erwärmung aus, so wird die Ausgleichsfeder 124 über den Ausgleichskolben 122 vorgespannt. Fährt der Spannkolben 114 aufgrund von Verschleiß im Zugmittel weiter aus, so verlagert sich der Ausgleichskolben 122 unter der Kraft der Ausgleichsfeder 124 in Richtung des Gehäusebodens 103, wobei das Volumen im Niederdruckraum 112 verringert wird. Ein Druckausgleich im Raum 125 erfolgt über Bohrungen 126. Der Ausgleichskolben 122 ist besonders gut dichtend ausgeführt.

Einem anderen, hier nicht gezeigten Ausführungsbeispiel zufolge ist der Spannkolben 114 im Innenmantel 106 innenseitig geführt, sodass der Ausgleichskolben 122 innenseitig des Außenmantels 104 einerseits und außenseitig des Innenmantels 106 andererseits geführt ist. Diese Anordnung bietet Vorteile hinsichtlich der Dichtigkeit des Ausgleichskolbens 122.

## Patentansprüche

1. Hydraulische Spanneinrichtung (100) für ein Zugmittelgetriebe, insbesondere Kettentrieb einer Brennkraftmaschine, umfassend ein Gehäuse (102), einen darin beweglich angeordneten federkraft- und hydraulisch beaufschlagten Spannkolben (114) und einen federkraftbeaufschlagten Ausgleichskolben (122), wobei die Spanneinrichtung (100) hydraulisch geschlossen und der Ausgleichskolben (122) zum Ausgleich des abgeschlossenen Hydraulikvolumens (110, 112, 130) geeignet ist,
**dadurch gekennzeichnet, dass** das Gehäuse (102) einen Außenmantel (104) und einen Innenmantel (106) umfasst, wobei der Spannkolben (114) außenseitig des Innenmantels (106) und der Ausgleichskolben (122) zwischen Außenmantel (104) und Spannkolben (114) geführt ist oder wobei der Spannkolben (114) innenseitig des Innenmantels (106) und der Ausgleichskolben (122) zwischen Außen- und Innenmantel (104, 106) geführt ist.

2. Spanneinrichtung (100) nach einem der vorhergehenden Ansprüche, wobei
- im Gehäuse (102) ein Hochdruckraum (130) und ein Niederdruckraum (110, 112) gebildet sind,
- der Spannkolben (114) dem Hochdruckraum (130) zugeordnet und längs geführt ist,
- zwischen Hochdruckraum (130) und Niederdruckraum (110) ein Rückschlagventil (116) angeordnet ist und
- zwischen Spannkolben (114) und dessen Längsführung ein Leckspalt (120) gebildet ist,
**dadurch gekennzeichnet, dass** der Ausgleichskolben (122) zum Ausgleich des Niederdruckraumvolumens (112) geeignet ist.

## Claims

1. A hydraulic tensioning device (100) for a belt and chain drive, especially a chain drive of an internal combustion engine, comprising a casing (102), a tensioning piston (114) movably disposed therein and actuated hydraulically or by spring force, and an equalising piston (122) actuated by spring force, wherein the tensioning device (100) is hydraulically closed and the equalising piston (122) is adapted to equalise the hydraulic volume (110, 112, 130) when shut off,
**characterised in that** the casing (102) has an outer jacket (104) and an inner jacket (106), wherein the tensioning piston (114) is guided on the outside of the inner jacket (106) and the equalising piston (122) is guided between the outer jacket (104) and the tensioning piston (114) or wherein the tensioning piston (114) is guided on the inside of the inner jacket (106) and the equalising piston (122) is guided between the outer jacket (104) and the inner jacket (106).

2. A tensioning device (100) according to claim 1, wherein
- a high-pressure chamber (130) and a low-pressure chamber (110, 112) are formed in the casing (102),
- the tensioning piston (114) is associated with the high-pressure chamber (130) and longitudinally guided,
- a non-return valve (116) is disposed between the high-pressure chamber (130) and the low-pressure chamber (110), and
- a leakage gap (120) is formed between the tensioning piston (114) and its longitudinal guide (120) **characterised in that** the equalising piston (122) is adapted to equalise the volume (112) of the low-pressure chamber.

## Revendications

1. Tendeur hydraulique (100) pour une transmission équipée d'un moyen de traction, notamment une transmission à chaîne d'un moteur thermique comprenant un boîtier (102) recevant un piston tendeur (114) mobile dans le boîtier et sollicité par une force de ressort et une force hydraulique ainsi qu'un piston compensateur (122) sollicité par la force d'un ressort,
le tendeur (100) étant fermé hydrauliquement et le piston d'équilibrage (122) assurant l'équilibrage du volume hydraulique fermé (110, 112, 130),
tendeur **caractérisé en ce que**
le boîtier (102) comporte une enveloppe extérieure (104) et une enveloppe intérieure (106),
le piston (114) du tendeur étant guidé sur le côté extérieur de l'enveloppe intérieure (106) et le piston compensateur (122) étant guidé entre l'enveloppe extérieure (104) et le piston tendeur (114), ou
le piston tendeur (114) étant guidé sur le côté intérieur de l'enveloppe intérieure (106) et le piston de compensation (122) étant guidé entre l'enveloppe extérieure et l'enveloppe intérieure (104, 106).

2. Tendeur (100) selon la revendication 1,
dans lequel
- le boîtier (102) comporte une chambre haute pression (130) et une chambre basse pression (110, 112),
- le piston tendeur (114) étant associé à la chambre haute pression (130) en étant guidé longitudinalement,
- un clapet antiretour (116) est monté entre la chambre haute pression (130) et la chambre basse pression (110), et
- un intervalle de fuite (120) est formé entre le piston tendeur (114) et son guidage longitudinal,
**caractérisé en ce que**
le piston compensateur (122) compense le volume de la chambre basse pression (112).
